# EUROPEAN PATENT APPLICATION

(11) **EP 4 568 141 A2**
(43) Date of publication of application: **11.06.2025**
(21) Application number: 24208871.4
(22) Date of filing: 25.10.2024
(51) Int. Cl.: H04B 15/04

(54) **PLATFORM INTERFERENCE MITIGATION IN WIRELESS COMMUNICATIONS**

(30) Priority: 06.12.2023 US 202318530264
(71) Applicant: INTEL Corporation, Santa Clara, CA 95054 (US)
(72) Inventor: AZIZI, Shahrnaz, Cupertino, 95014 (US); PARK, Minyoung, San Ramon, 94582 (US); VITURI, Shlomi, 6732925 Tel Aviv (IL); HAN, Dong-Ho, Beaverton (US); RADJAI, Amir Ali, Portland, 97225 (US); RESHEF, Ehud, 3608249 Kiryat Tivon (IL)
(74) Representative: Viering, Jentschura & Partner mbB Patent- und Rechtsanwälte

(57) **Abstract**

Disclosed herein are devices, methods, and systems for mitigating platform-based interference of wireless communications. The platform interference mitigation system may determine a platform-based wireless interference characteristic based on an operational setting of a computing platform, determine an interference mitigation parameter based on the platform-based wireless interference characteristic, and control a wireless communication interface of the computing platform based on the interference mitigation parameter. Such platform-based interference mitigation allows for optimizing the computing platform operations as well as the wireless communication interface.

## Description

### Technical Field

The disclosure relates generally to wireless communications, and in particular, to strategies for mitigation of platform-based interference on wireless communications.

### Background

As computing platforms evolve and as wireless communications standards/protocols change, there may be increased challenges posed by interference to its wireless communications caused by operation of the computing platform itself. While platform interference may be generated by any of the components of the computing platform, one example of platform-based interference in a wireless system is the noise associated with the clock of a memory, and in particular, double-data rate (DDR) and low-power DDR (LPDDR) memories. Such platform-based wireless interference may occur at a frequency that is within the frequency spectrum used for wireless communications on the computing platform, and therefore causes interference on certain channels of the wireless communication system. This interference may degrade, impair, or fully disrupt wireless communication on the channels that are impacted by the platform-based wireless interference.

In some cases, the wireless communication system may simply avoid using the impacted channels, but this is not always feasible or desired, especially with complex communication protocols that may have limited bandwidth, grouped/combined channels (e.g., multi-link operation or tri-band dual concurrency), etc. In other cases, the computing platform may simply change its operational settings (e.g., change the clock frequency of the memory that is generating interference within the wireless communication bandwidth) to move the interference outside the wireless communication band. However, this may reduce performance (e.g., slower memory speeds) of the computing platform and/or require a time-consuming reconfiguration (e.g., a memory validation/training at the new clock frequency). Neither of these solutions may be satisfactory in view of the desired features and desired user experience for a given computing platform.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 shows an example of a portion of a wireless communication frequency band of a wireless access point and the potential platform-based wireless interferences;
FIG. 2 shows exemplary frames for a non-high-throughput (non-HT) duplicate physical packet data unit (PPDU);
FIG. 3 shows an example of an overlay of noise/radio frequency interference (RFI) on the non-HT duplicate PPDU of FIG. 2;
FIG. 4 shows an example of information exchanges between an access point (AP) and the wireless device of a computing platform in order to mitigate the impact of platform-based interference on wireless communications;
FIG. 5 shows an exemplary schematic drawing of a computing platform that may mitigate the impact of platform-based interference on wireless communications;
FIG. 6 shows an exemplary schematic drawing of a device for mitigating the impact of platform-based interference on wireless communications; and
FIG. 7 depicts a schematic flow diagram of an exemplary method for mitigating the impact of platform-based interference on wireless communications.

### Description

The following detailed description refers to the accompanying drawings that show, by way of illustration, exemplary details and features.

The word "exemplary" is used herein to mean "serving as an example, instance, or illustration." Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (*e*.*g*., "plural [elements]", "multiple [elements]") referring to a quantity of elements expressly refers to more than one of the said elements. For instance, the phrase "a plurality" may be understood to include a numerical quantity greater than or equal to two (*e*.*g.*, two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, *e.g*., provided as a file, a portion of a file, a set of files, a signal or stream, a portion of a signal or stream, a set of signals or streams, and the like. Further, the term "data" may also be used to mean a reference to information, *e.g*., in the form of a pointer. The term "data", however, is not limited to the aforementioned examples and may take various forms and represent any information as understood in the art.

The terms "processor" or "controller" as, for example, used herein may be understood as any kind of technological entity (e.g., hardware, software, and/or a combination of both) that allows handling of data. The data may be handled according to one or more specific functions executed by the processor or controller. Further, a processor or controller as used herein may be understood as any kind of circuit, *e.g*., any kind of analog or digital circuit. A processor or a controller may thus be or include an analog circuit, digital circuit, mixed-signal circuit, software, firmware, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (*e.g*., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g*., the transmission of radio signals) and logical transmission (*e.g.*, the transmission of digital data over a logical software-level connection). For example, a processor or controller may transmit or receive data over a software-level connection with another processor or controller in the form of radio signals, where the physical transmission and reception is handled by radio-layer components such as radio frequency (RF) transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both "direct" calculations via a mathematical expression/formula/relationship and "indirect" calculations via lookup or hash tables and other array indexing or searching operations.

As noted above, platform-based interference caused by a computing platform may impact the performance of its wireless communications. While platform-based wireless interference may be generated by any of the components of the computing platform, one example of platform-based interference on wireless communications is the noise associated with the clock of a memory, and in particular, double-data rate (DDR) and low-power DDR (LPDDR) memories. Such components may operate at a frequency (or harmonics thereof) that is within the frequency spectrum used for wireless communications, and therefore causes interference on certain channels of the wireless communication system. This platform-based wireless interference may degrade or impair wireless communication performance on the channels that overlap with the interference.

Given that one of the main sources of platform-based wireless interference/noise may be the clock of DDR and LPDDR memories, the description below focuses on interference from DDR/LPDDR components. It should be understood, however, that the disclosed platform interference mitigation may be for any type of platform-originated interference that is caused or generated by any type of platform operation or any component(s) of the platform (generally referred to herein as operational setting(s)). In conventional computing systems, the platform-based wireless interference caused by DDR/LPDDR memories is usually dealt with by changing the clock frequency of the DDR/LPDDR to a different frequency that does not cause interference in the operational bandwidth of the wireless communication system or does not cause interference on the currently-used channel of the wireless communication system. For example, the DDR/LPDDR memory may be configured to operate at two different Dynamic Voltage Frequency Scaling (DVFS) points, where the DVFS operation point may be selected so that its associated interference does not impact the currently used channel/band.

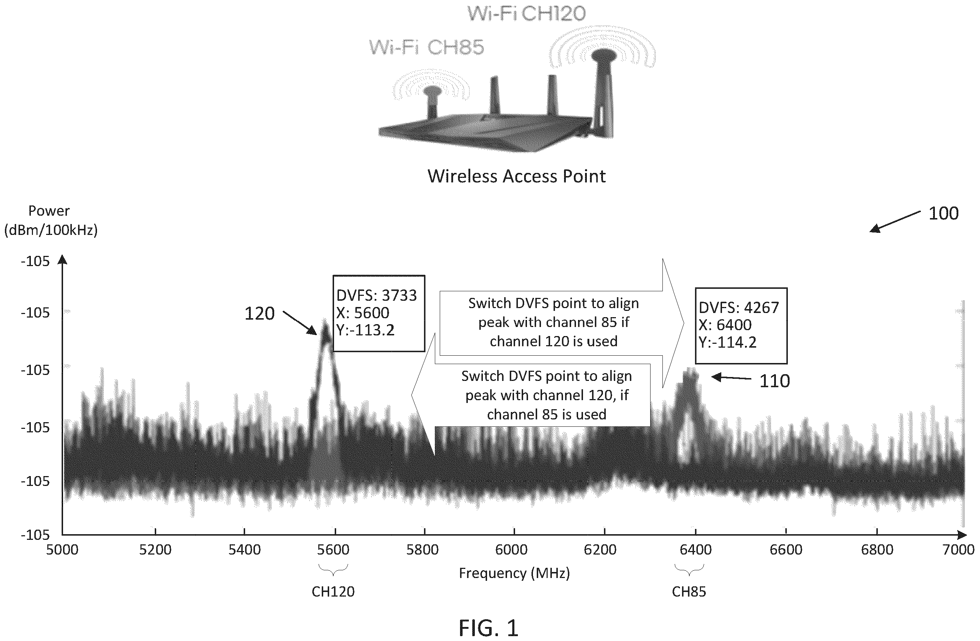

This example is shown in FIG. 1, which plots signal noise caused by the DDR/LPDDR of a computing platform. As can be seen in plot 100, when the DDR/LPDDR has a DVFS operation point of 4267, there is a significant noise spike at 6400 MHz (labeled in FIG. 1 as 110), which approximately overlaps with wireless communication channel 85 (centered at 6375 MHz) of the 6 GHz band. When the DDR/LPDDR has a DVFS operation point of 3733, there is a significant noise spike at 5600 MHz (labeled in FIG. 1 as 120), which approximately overlaps with wireless communication channel 120 (centered at 5600 MHz) of the 5 GHz band. Thus, the computing platform may alter the DVFS operation point of the DDR/LPDDR based on which wireless band/channel is being used by the wireless communication system.

This solution, however, may not allow for optimal configurations and may no longer be sufficient where two or more wireless bands/channels of the computing system may be used at the same time. For example, wireless communication standards, such as Wi-Fi 7, that support multi-link operation (MLO) may have different modes of operation that include enhanced multi-link single radio (eMI,SR), tri-band dual concurrency (TBDC), and other wireless protocols that support concurrent transmit/receive operations in two different bands of the wireless communications protocol (e.g., in two different frequency bands and/or on two different channels defined by an IEEE 802.11 standard). While it may be possible to extend the DVFS-switching method to have more than two operational points so that the DDR/LPDDR interference may be moved around to more than two different channels, this may not be ideal, as it may require extra hardware, software, and memory training costs. As should be understood, any new DVFS operating point (e.g., memory operation speed) requires validation and tuning, and therefore added resources and time to market. In addition, each new DVFS operating point would need be trained in the memory at boot, and such training would add to the already very restricted boot time limitations.

As discussed in more detail below, the disclosed platform interference mitigation system may collect information about the interference the computing platform may be generating that could interfere with the wireless communications (generally referred to herein as platform-based wireless interference information or characteristics). For example, the computing platform may collect information about the DDR operational speeds and notify the wireless communication system (e.g., the driver) or the wireless communication system may query the computing platform for information about the interference or the set of expected self-interfering frequency ranges on the platform (e.g., the frequencies at which the platform may be generating interference that would interfere with wireless communications of the computing platform). Such interference information (also referred to herein as platform-based interference characteristics or platform-based wireless interference characteristics) may include interference characteristics and statistics such as workload-dependent spectrum, bandwidth, average power, etc. The wireless communication system of the computing platform may further process this information about platform-based interference characteristics to extract data and exchange it with the wireless access point (AP) that manages communications. Utilizing this platform-based interference characteristic information, the wireless communication system of the computing platform and the wireless AP may coordinate computing platform operation and channel assignments to avoid or mitigate the interference-dynamically during run-time-depending on the operational setting(s) of the computing platform.

By using platform-based interference characteristic information from the computing platform, the need to adjust/limit operating points of the computing platform (e.g., by switching the DVFS point to avoid interference) is reduced. For example, the computing platform may only need to adjust/limit operating points of the computing platform (e.g., by switching the DVFS point to avoid interference) when the platform-based interference exists on the primary channel (e.g., a primary 20 MHz channel) of the two channels allocated in eMLSR operation. If the interference is not on the primary channel, the computing platform may continue to select a DVFS point that optimizes power, thermal performance, computational performance, etc. In addition, the wireless communication system of the computing platform may use the platform-based interference information to communicate with the AP so that the AP avoids assigning certain channels for wireless communications to the computing platform that would be interfered with by the platform-based interference. The wireless communication system may not necessarily send the platform-based interference information to the AP, but instead, may send information about what bands, regions of the bands, and/or channels would be acceptable/unacceptable for wireless communications with the computing platform.

An advantage of the disclosed platform interference mitigation system may be that a methodical approach may be used to resolve the impact of platform-based interference with wireless communications of the computing platform, rather than simply trying different wireless bands, channel configurations, computing platform operational settings (e.g., memory operational points, e.g., for each new computing platform with the model/make and memory configuration thereof), etc. The disclosed platform interference mitigation system may allow for configuring the computing platform and the wireless communication system to an operation point (operational setting) that is optimized for requirements on both the computing platform and the wireless communication system in terms of power, computing performance, battery life, thermal performance, wireless communication throughput/latency, etc., which may be context/application-aware and computing-platform specific.

The disclosed platform interference mitigation system is discussed with respect to two examples below, one where the wireless communication interface is configured for an eMLSR mode of operation and one where the wireless communication interface is configured for a TBDC mode of operation. These examples are not limiting and are illustrated below as examples because the conventional way of mitigating interferences (e.g., moving the DVFS point) does not provide an adequate solution for these modes of operation. As noted above, while the examples below are discussed with respect to wireless communications according to the IEEE 802.11 standard, such as Wi-Fi 7 or 8, the concepts below may apply equally to any type of wireless communication system according to any communication standard. As also noted above, while platform-based interference from DDR/LPDDR memories is used as an example, the concepts below may apply to any platform-based source of interference (e.g., noise) to the wireless communication system.

In general, the eMLSR mode of operation is a feature according to the IEEE 802.11be standard (Wi-Fi 7). eMLSR allows a nonaccess point (non-AP) multi-link device (MLD) with multiple receive chains to listen on a set of enabled links when the corresponding stations (STAs) are affiliated with the non-AP MLD. The client wireless device (referred to as STAs) are in the awake state for an initial control frame sent by an AP MLD in a non-high-throughput (non-HT) duplicate physical layer (PHY) protocol data unit (PPDU) with one spatial stream, followed by frame exchanges on the link on which the initial control frame was received. As should be understood, a client wireless device (STA) may be any type of computing platform such as a laptop, desktop, tablet, smartphone, wearable, etc.

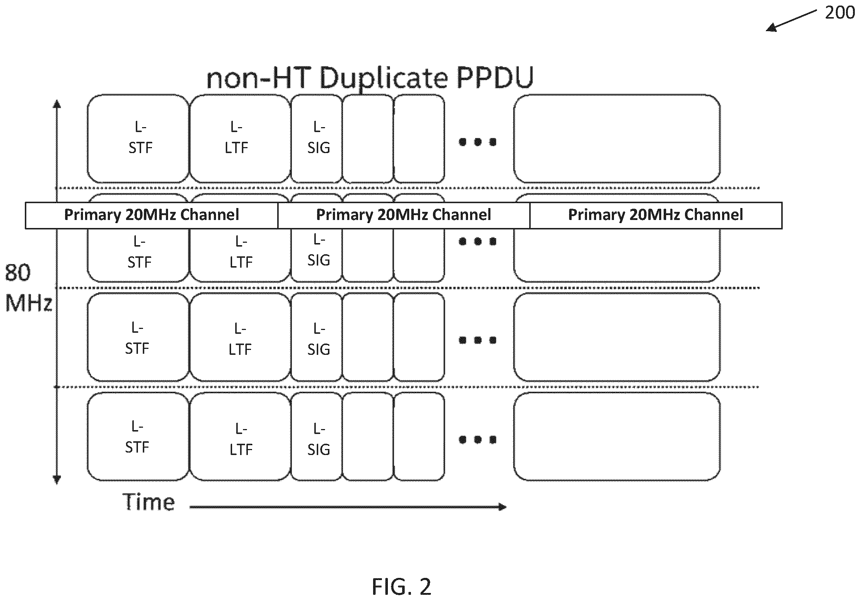

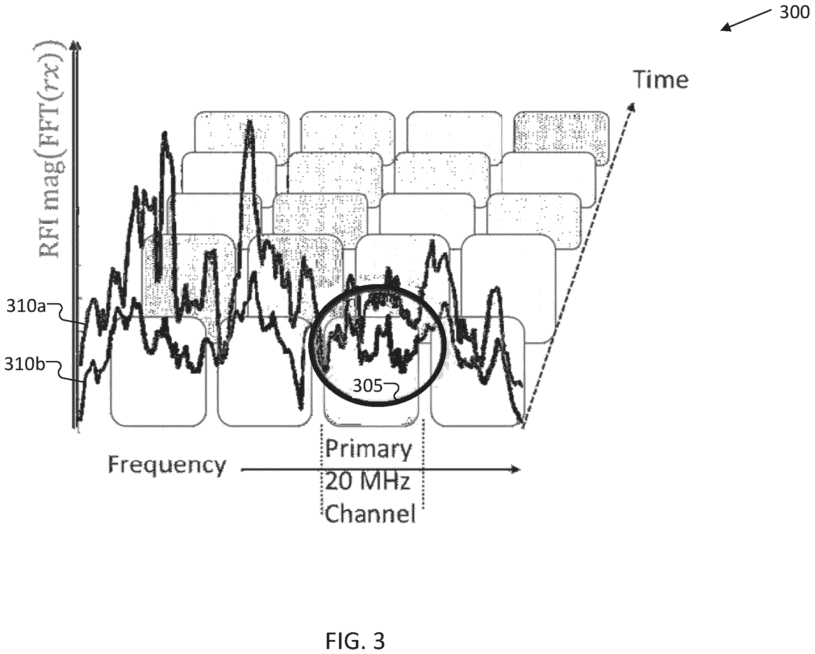

The computing platform (e.g., a controller/processor of the computing platform that communicates with the wireless module of the computing platform) may inform the wireless module of the center frequency, bandwidth and power of the DDR/LPDDR noise. This information may be stored in a memory of the computing system and may be based on the static and dynamic operating characteristics of the computing platform. Given that the initial eMLSR control frame is sent in a non-high-throughput (non-HT) duplicate physical packet data unit (PPDU), the interference in low SNR regions would block the operation if the platform-based interference is wideband (e.g., almost 20 MHz, which may cover a channel) and has a center frequency that falls on one of the primary channels of the two allocated eMLSR channels. The format of non-HT duplicated frame is shown in plot 200 of FIG. 2. And FIG. 3 shows in plot 300 an overlay of noise/RFI on the non-HT duplicated frame of FIG. 2.

If the platform-based wireless interference (plotted on lines 310a and 310b) does not fall on the primary channel, as indicated in FIG. 3 by the circle 305, then the wireless system on the computing platform should be able to decode the control frame. When, however, the platform-based interference falls on the primary channel, the wireless system on the computing platform may still be able decode the control channel. This may be because the control frame uses the lowest modulation scheme. The wireless system receives information about the platform-based interference and, knowing the channels impacted by the platform-based interference and knowing that the channel allocated in the control frame is one impacted by the platform-based interference, the wireless system may decline to send an acknowledgement back to the wireless AP that sent the control message and expected an acknowledgment. As should be understood, if the control frame is not decodable by the computing platform, the computing platform would, in any event, not send acknowledgment. Because the wireless AP does not receive an acknowledgment from the computing platform, the AP would not use the channel for its transmission to the computing platform.

The wireless device of the computing platform may then switch to another wireless AP that does not utilize the channel(s) impacted by the platform-based interference. If there is no such other AP available (e.g., in the case of an area covered by a single AP, e.g., in a normal home environment), the wireless device of the computing platform may change its mode of operation to stop using eMLSR or TBDC operations. The higher-level software of the computing platform may inform, for example, a user through a pop-up window or message, that the AP's current channel suffers from interference and recommend changing the AP's channel by contacting its service provider. Or, if the AP is able to react to messages from stations such as the computing platform, the computing platform may send a message to the AP requesting a channel switch and indicating which channel(s) or region(s) of channel(s) are to be avoided for wireless communications with the computing platform. For example, if a wireless channel is 160 MHz wide and only a 10 MHz portion of the channel is impacted by the platform-based interference, then the request may indicate that only that 10 MHz portion of the channel should be avoided. As should be understood, according to the IEEE 802.11 protocol, a channel may be divided into Resource Units (RUs), and the AP transmits wireless data to the wireless communication system of the computing platform via one (or multiple) resource units (RU(s)). In case the AP is provided by a third-party supplier, an automated message may be provided, due to platform-based interference, to the third-party supplier of the AP, rather than or in addition to the end-user, requesting a reprogramming/re-planning of the AP.

In addition, if the platform-based interference falls on the primary channel, the wireless device of the computing platform may limit all operations on the conflicting channel to non-HT duplicate and a low modulation-coding scheme (MCS). In such a case, wireless communications may be lower performance but less impacted by the interference. In addition, if the platform-based interference falls on the primary channel, the wireless device of the computing platform may request a change to the operational setting of the platform-specific resource that may be causing the interference (e.g., requesting a change to the DVFS point of a DDR/LPDDR that may be creating interference).

In addition, if the platform-based interference falls on the primary channel, the wireless device of the computing platform may adjust the automatic gain control on the primary channel to avoid saturation and/or a false alarm during initial packet acquisition. After the start of packet detection and timing/frequency correction, the wireless device of the computing platform may decode the eMLSR control frame using the duplicated portions of the nonprimary channel. Only if the control frame indicates the data exchange to follow is to occur in the same frequency region as the platform-based interference (e.g., the interference overlaps on the wireless channel to be used), the wireless device of the computing platform may request a change to the operational setting/parameter of the platform-specific resource that may be causing the interference (e.g., switching the interference to a "no-radio zone" by, e.g., changing the DVFS point of a DDR/LPDDR to a point where the interference is outside of the frequency band used for this set of communications) for the duration of the communications.

If the platform-based interference falls on a channel other than the primary channel, the wireless device of the computing platform may decode the eMLSR control frame and if the information in the control frame indicates (1) that the next frame exchanges will fall on the channel/resource units (RUs) that will be impacted by the platform-based interference and (2) that interference characteristics and signal strength are such that wireless communication performance will be degraded by the platform-based interference, the wireless device of the computing platform may request a change to the operational setting of the platform-specific resource that may be causing the interference (e.g., switching the interference to a "no-radio zone") for the duration of the exchanges.

If the information in the control frame indicates that the next frame exchanges will not fall on channel/resource units (RUs) that will be impacted by the platform-based interference, the wireless communications may continue normal operation and there is no need for the wireless device of the computing platform to request a change to the operational setting of the platform-specific resource that may be causing the interference.

If the mode of operation of the wireless communications are tri-band dual concurrency (TBDC), the wireless device of the computing platform may independently receive and transmit in two different channels allocated by the wireless communication system. In this mode, information may be exchanged between the computing platform and the access point/controller of the wireless communication system. The information provided by the computing platform may include capability information and/or frame exchange sequence between the AP/controller and the computing platform (STA), where the computing platform may be able to request that the AP/controller use or not use certain channels/regions of the frequency band (e.g., at a granularity of multiple of RUs) for frame exchanges. This may be referred to as an MRU/puncturing request sent from and/or exchanged between the computing platform and the AP/controller. The AP/controller may collect and log requests from not only the computing platform but also other stations associated with the AP, where the requests indicate which channels/band regions should be avoided (black-listed) or to which it may change its operating channel (white-listed). The AP may then determine channels/bands that best serves the overall needs of the basic service set (BSS). The AP/controller may broadcast new operating channels and send a channel switch command(s) to associated stations, as needed.

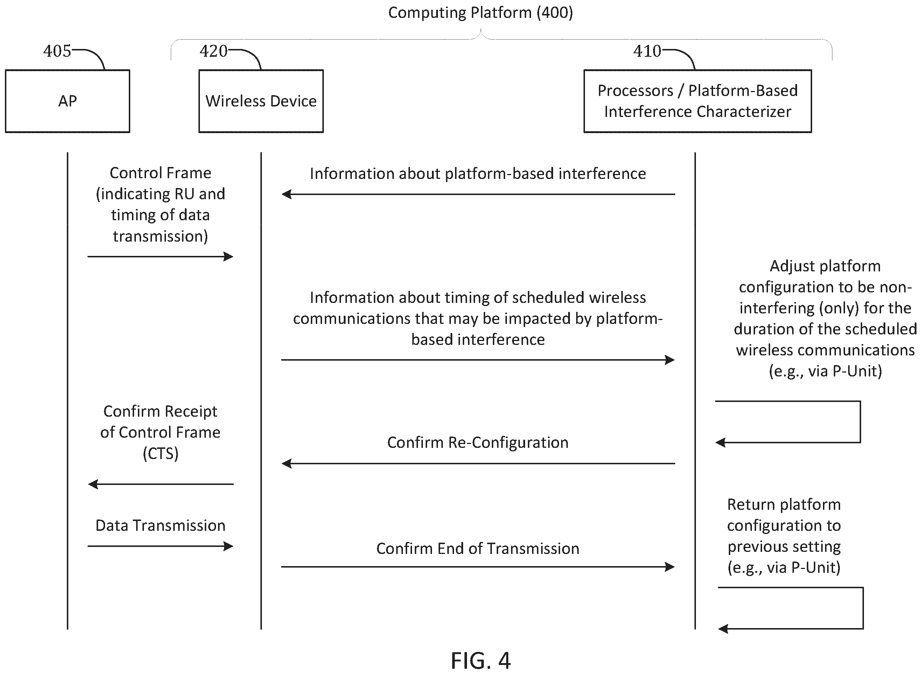

FIG. 4 shows an example of information exchanges between an access point (AP) 405 and a wireless device 420 of a computing platform 400 that may be used to mitigate the impact of platform-based interference on wireless communications between the AP 405 and the wireless device 420. The computing platform 400 may provide information to the wireless device 420 that describes or characterizes the platform-based interference that may impact wireless communications. For example, the computing platform 400 may, via one or more processors / platform-based interference characterizer 410, determine the operational settings of the computing platform 400 and use this information to determine platform-based interference characteristics. The processors / platform-based interference characterizer 410 may use the platform-based interference characteristics to determine and provide the wireless device 420 with restrictions to channels, portions of channels, bands, portions of bands, etc. that should be taken into account for wireless communications with the computing platform 400.

For example, a DDR/LPDDR memory of the computing platform 400 is operating with an operational parameter (e.g., a DVFS point) that creates interference on channel 85, the processors / platform-based interference characterizer 410 may inform the wireless device 420 that all or a portion of channel 85 should be avoided for wireless communications with AP 405. If the wireless device 420 receives a control message from AP 405 indicating that a scheduled transmission will use a resource unit (RU) that is within the platform-based interference restricted channels (or portions of channels, bands, portions of bands, etc.), the wireless device 420 may provide this information (e.g., timing information and channel information) to the processors / platform-based interference characterizer 410 so that it may adjust its operating parameters to an operational configuration that does not generate platform-based interference that would interfere with the scheduled transmission (e.g., switching to a DVFS point where the platform-based interference is outside the channel for the scheduled transmission). After the processors / platform-based interference characterizer 410 confirms the adjustment to the operational configuration, the wireless device 420 may acknowledge receipt of the control message from AP 405 by sending, for example, a CTS. Then, the AP 405 may wirelessly transmit the transmission at the scheduled time using the channel(s) (RUs) indicated in the control message.

Once the transmission has ended, the computing platform 400 may, via processors / platform-based interference characterizer 410, return its platform configuration to its previous setting. As is understood, this is just one example of the exchanges that may take place between AP 430 and computing platform 400 for mitigating platform-based interference, and the system may make other exchanges to employ the other mitigation strategies discussed above.

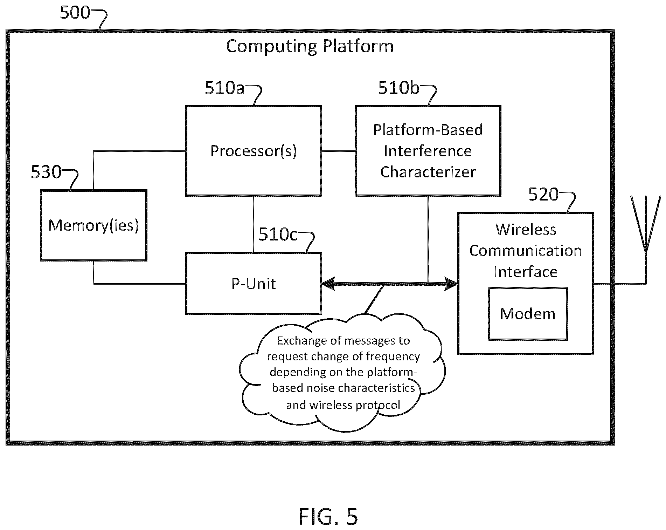

FIG. 5 shows an exemplary schematic drawing of a computing platform 500 for mitigating the impact of platform-based interference on wireless communications. The computing platform 500 may include one or more memory 530, one or more wireless communication interface 520 (e.g., a wireless device with a modem), and processing circuitry such as one or more processors 5 10a, a platform-based interference characterizer 5 10b, one or more platform control units (P-Unit) 510c, etc., that may analyze platform-based operational configurations, determine wireless interference that may be caused by the platform-based operational configurations, and adjust operational parameters on the computing platform 500 to mitigate the platform-based interference on wireless communications over the wireless communication interface 520. As is understood, the processing circuitry of computing platform 500 may be divided physically, logically, or not at all across any number of components and/or modules. For example, the platform-based interference characterizer 510b may be part of the P-Unit 510c, part of processor 510a, or both, and the logical divisions shown in FIG. 5 is merely exemplary.

To mitigate the platform-based interference on wireless communications over the wireless communication interface 520, the P-Unit 510c and the wireless communication interface 520 may exchange message to identify potential frequencies/channels that may be impacted by platform-based interference and to negotiate a change of frequency (e.g., with an access point) for wireless communications over the wireless communication interface 520, where the change in frequency may be based on the platform-based interference characteristics, wireless protocol, etc. One example of such a message exchange is shown in and described above with respect to FIG. 4.

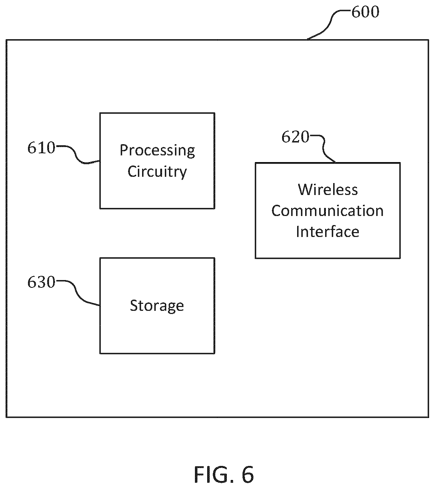

FIG. 6 shows an exemplary schematic drawing of a device 600 for mitigating the impact of platform-based interference on wireless communications. Device 600 may include any of the features for mitigating the impact of platform-based interference on wireless communications discussed above. The system for mitigating the impact of platform-based interference on wireless communications of FIG. 6 may be implemented as a device, a method, and/or a computer readable medium that, when executed, performs the features for mitigating the impact of platform-based interference on wireless communications described above. It should be understood that device 600 is only an example, and other configurations may be possible that include, for example, different components or additional components.

Device 600 includes processing circuitry 610 connected to storage 630. In addition to or in combination with any of the features described in the following paragraphs, processing circuitry 610 is configured to determine a platform-based wireless interference characteristic based on an operational setting of a computing platform. In addition to or in combination with any of the features described in the following paragraphs, processing circuitry 610 is also configured to determine an interference mitigation parameter based on the platform-based wireless interference characteristic. In addition to or in combination with any of the features described in the following paragraphs, processing circuitry 610 is also configured to control a wireless communication interface 620 of the computing platform based on the interference mitigation parameter.

Furthermore, in addition to or in combination with any of the features described in this or the preceding paragraph with respect to device 600, the operational setting may include operation of a component of the computing platform that induces the platform-based wireless interference characteristic within a frequency band of the wireless communication interface 620. Furthermore, in addition to or in combination with any of the features described in this or the preceding paragraph, the component may include a memory (e.g., as part of storage 620) of the computing platform and the operation includes a memory operation at a memory clock speed. Furthermore, in addition to or in combination with any of the features described in this or the preceding paragraph, the memory may include a double data rate (DDR) memory or a low power double data rate memory (LPDDR).

Furthermore, in addition to or in combination with any of the features described in this or the preceding two paragraphs with respect to device 600, the platform-based wireless interference characteristic may include an interference signal on a wireless channel of wireless communication interface 620. Furthermore, in addition to or in combination with any of the features described in this or the preceding two paragraphs, the interference signal may include platform-based noise on the wireless channel. Furthermore, in addition to or in combination with any of the features described in this or the preceding two paragraphs, the interference signal may be induced by a memory operation, a memory speed, or a clock of an operational component of the computing platform. Furthermore, in addition to or in combination with any of the features described in this or the preceding two paragraphs, the wireless channel may include at least one channel of two or more Enhanced Multilink Single-Radio Operation (eMLSR) channels. Furthermore, in addition to or in combination with any of the features described in this or the preceding two paragraphs, the wireless channel may be defined by an IEEE 802.11 standard.

Furthermore, in addition to or in combination with any of the features described in this or the preceding three paragraphs with respect to device 600, the wireless channel may include one or more of a 20 MHz channel, a 40 MHz channel, a 80 MHz channel, a 160 MHz channel, and a 320 MHz channel. Furthermore, in addition to or in combination with any of the features described in this or the preceding three paragraphs, the at least one channel of two or more eMLSR channels may include a primary channel. Furthermore, in addition to or in combination with any of the features described in this or the preceding three paragraphs, processing circuitry 610 may be configured to determine whether the at least one channel includes a primary channel, wherein the interference mitigation parameter may be based on whether the at least one channel includes the primary channel. Furthermore, in addition to or in combination with any of the features described in this or the preceding three paragraphs, if the at least one channel includes the primary channel, the interference mitigation parameter may include the processing circuitry 610 configured to refuse to send an acknowledgement of receipt of a control message indicating a reception channel for receiving wireless communications on wireless communication interface 620.

Furthermore, in addition to or in combination with any of the features described in this or the preceding four paragraphs with respect to device 600, if the at least one channel includes the primary channel, the interference mitigation parameter may include the processing circuitry 610 configured to limit a type of communications over the wireless communication interface 620. Furthermore, in addition to or in combination with any of the features described in this or the preceding four paragraphs, the type of communications over wireless communication interface 620 may be limited to a non-high-throughput (non-HT) low modulation-coding-scheme (low MSC) type of communications. Furthermore, in addition to or in combination with any of the features described in this or the preceding four paragraphs, if the at least one channel includes the primary channel, the interference mitigation parameter may include the processing circuitry 610 configured to adjust a gain setting for receiving wireless signals on wireless communication interface 620 during an initial packet acquisition; decode a received control frame using a duplicated portion of a non-primary channel, wherein the received control frame indicates a channel for scheduled wireless communication exchanges; and adjust, only if the platform-based wireless interference characteristic includes interference on the channel for the scheduled wireless communication exchanges, the operational setting of the computing platform to a non-interference operational setting.

Furthermore, in addition to or in combination with any of the features described in this or the preceding five paragraphs with respect to device 600, the non-interference operational setting may include a configuration of the computing platform that generates insignificant platform-based interference on the channel for the scheduled wireless communication exchanges. Furthermore, in addition to or in combination with any of the features described in this or the preceding five paragraphs, processing circuitry 610 may be configured to decode the received control frame after a start of packet detection and timing/frequency correction for the received control frame. Furthermore, in addition to or in combination with any of the features described in this or the preceding five paragraphs, if the at least one channel includes a non-primary channel, processing circuitry 610 may be configured to determine a channel for scheduled wireless communication exchanges; and adjust, only if the platform-based wireless interference characteristic includes interference on the channel for the scheduled wireless communication exchanges, the operational setting of the computing platform to a non-interference operational setting.

Furthermore, in addition to or in combination with any of the features described in this or the preceding six paragraphs with respect to device 600, the wireless channel may include a transmit channel and a receive channel that are independent. Furthermore, in addition to or in combination with any of the features described in this or the preceding six paragraphs, an operation mode of wireless communication interface 620 may include a tri-band dual concurrency mode. Furthermore, in addition to or in combination with any of the features described in this or the preceding six paragraphs, device 600 may be is configured to generate a request that a blocked wireless region be restricted from use for wireless data transmissions over the wireless communication interface 620. Furthermore, in addition to or in combination with any of the features described in this or the preceding six paragraphs, the blocked wireless region may include one or more resource units for the wireless data transmissions. Furthermore, in addition to or in combination with any of the features described in this or the preceding six paragraphs, processing circuitry 610 may be configured to set up wireless communication interface 620 based on requests of other stations associated with an access point that defines wireless communications over wireless communication interface 620.

Furthermore, in addition to or in combination with any of the features described in this or the preceding seven paragraphs with respect to device 600, the platform-based wireless interference characteristic may include a noise spectrum, a noise bandwidth, and/or an average noise power due to the operational setting of the computing platform. Furthermore, in addition to or in combination with any of the features described in this or the preceding seven paragraphs, the interference mitigation parameter may include a usage restriction on a wireless channel of wireless communication interface 620. Furthermore, in addition to or in combination with any of the features described in this or the preceding seven paragraphs, the usage restriction may include a blocked wireless channel that is restricted from use for wireless data transmissions over the wireless communication interface 620. Furthermore, in addition to or in combination with any of the features described in this or the preceding seven paragraphs, wireless communication interface 620 may be defined by a wireless local area network protocol. Furthermore, in addition to or in combination with any of the features described in this or the preceding seven paragraphs, the wireless local area network protocol may be defined by an IEEE 802.11 standard.

Furthermore, in addition to or in combination with any of the features described in this or the preceding eight paragraphs with respect to device 600, processing circuitry 610 may be configured to provide the interference mitigation parameter to a wireless access point during a negotiation between the computing platform and the wireless access point, wherein the negotiation is over an allocated wireless channel resource for the wireless communication interface 620. Furthermore, in addition to or in combination with any of the features described in this or the preceding eight paragraphs, processing circuitry 610 may be configured to reject, based on the interference mitigation parameter, a channel allocation received from a wireless access point. Furthermore, in addition to or in combination with any of the features described in this or the preceding eight paragraphs, processing circuitry 610 may be configured to send a non-acknowledgement of a channel allocation message from the wireless access point or configured to withhold from sending an acknowledgement of the channel allocation message. Furthermore, in addition to or in combination with any of the features described in this or the preceding eight paragraphs, processing circuitry 610 may be configured to switch wireless communications from a wireless access point to an other wireless access point that does not utilize a wireless channel impacted by the platform-based wireless interference characteristic.

Furthermore, in addition to or in combination with any of the features described in this or the preceding nine paragraphs with respect to device 600, processing circuitry 610 may be configured to limit a type of communication over an allocated channel allocated to the computing platform. Furthermore, in addition to or in combination with any of the features described in this or the preceding nine paragraphs, processing circuitry 610 may be configured to adjust the operational setting of the computing platform that is associated with the platform-based wireless interference characteristic to an adjusted operational setting, wherein the adjusted operational setting may be configured to adjust the platform-based wireless interference characteristic to not interfere with wireless communication interface 620. Furthermore, in addition to or in combination with any of the features described in this or the preceding nine paragraphs, the operational setting may include a clock speed of a memory. Furthermore, in addition to or in combination with any of the features described in this or the preceding nine paragraphs, the operational setting may include a Dynamic Voltage Frequency Scaling (DVFS) point of a memory.

Furthermore, in addition to or in combination with any of the features described in this or the preceding ten paragraphs with respect to device 600, processing circuitry 610 may be configured to send a user message to a user of the computing platform informing the user that a channel allocation of wireless communication interface 620 conflicts with the platform-based wireless interference characteristic. Furthermore, in addition to or in combination with any of the features described in this or the preceding ten paragraphs, processing circuitry 610 may be configured to send a configuration message to the wireless access point indicating that one or more wireless channels are not to be used for wireless communication interface 620. Furthermore, in addition to or in combination with any of the features described in this or the preceding ten paragraphs, processing circuitry 610 may be further configured to adjust, based on the interference mitigation parameter, the operational setting that gave rise to the platform-based wireless interference characteristic, during a negotiated time within a wireless frame to be received over wireless communication interface 620. Furthermore, in addition to or in combination with any of the features described in this or the preceding ten paragraphs, the negotiation time may be based on a wireless communication protocol and/or a wireless system configuration of wireless communication interface 620.

Furthermore, in addition to or in combination with any of the features described in this or the preceding eleven paragraphs with respect to device 600, processing circuitry 610 may be further configured to revert to a previous operational setting based on whether the platform-based wireless interference characteristic interferes with a scheduled wireless communication on wireless communication interface 620. Furthermore, in addition to or in combination with any of the features described in this or the preceding eleven paragraphs, the operational setting may include an operating point of a memory. Furthermore, in addition to or in combination with any of the features described in this or the preceding eleven paragraphs, the operating point may include a speed of double-data rate memory. Furthermore, in addition to or in combination with any of the features described in this or the preceding eleven paragraphs, the operating point may include a Dynamic Voltage Frequency Scaling (DVFS) point of the memory.

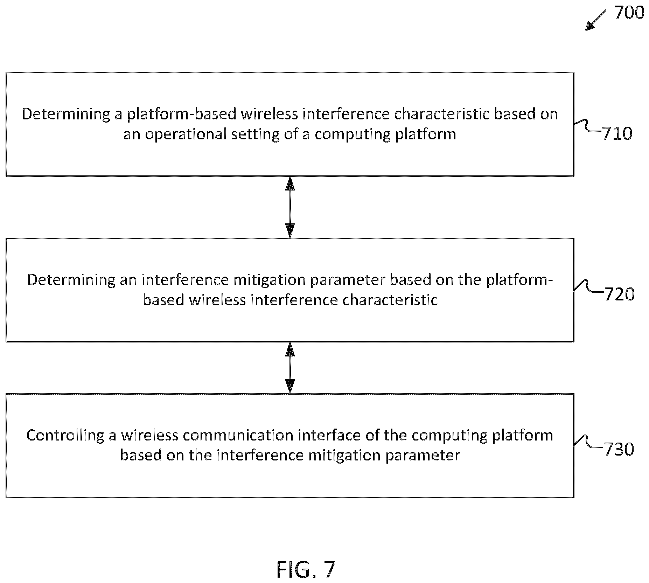

FIG. 7 depicts a schematic flow diagram of an exemplary method 700 for mitigating the impact of platform-based interference on wireless communications. Method 700 may implement any of the features for mitigating the impact of platform-based interference on its wireless communications, as discussed above.

Method 700 includes, in 710, determining a platform-based wireless interference characteristic based on an operational setting of a computing platform. Method 700 also includes, in 720, determining an interference mitigation parameter based on the platform-based wireless interference characteristic. Method 700 also includes, in 730, controlling a wireless communication interface of the computing platform based on the interference mitigation parameter.

In the following, various examples are provided that may include one or more features of the platform-based interference mitigation system for mitigating the impact of platform-based interference on its wireless communications, as discussed above. It may be intended that aspects described in relation to the devices may apply also to the described method(s), and vice versa.

Example 1 is a device including processing circuitry coupled to storage, the processing circuitry configured to determine a platform-based wireless interference characteristic based on an operational setting of a computing platform. The processing circuitry is also configured to determine an interference mitigation parameter based on the platform-based wireless interference characteristic. The processing circuitry is also configured to control a wireless communication interface of the computing platform based on the interference mitigation parameter.

Example 2 is the device of example 1, wherein the operational setting includes operation of a component of the computing platform that induces the platform-based wireless interference characteristic within a frequency band of the wireless communication interface.

Example 3 is the device of example 2, wherein the component includes a memory of the computing platform and the operation includes a memory operation at a memory clock speed.

Example 4 is the device of example 3, wherein the memory includes a double data rate (DDR) memory or a low power double data rate memory (LPDDR).

Example 5 is the device of any one of examples 1 to 4, wherein the platform-based wireless interference characteristic includes an interference signal on a wireless channel of the wireless communication interface.

Example 6 is the device of example 5, wherein the interference signal includes platform-based noise on the wireless channel.

Example 7 is the device of either one of examples 5 or 6, wherein the interference signal is induced by a memory operation, a memory speed, or a clock of an operational component of the computing platform.

Example 8 is the device of any one of examples 5 to 7, wherein the wireless channel includes at least one channel of two or more Enhanced Multilink Single-Radio Operation (eMLSR) channels.

Example 9 is the device of any one of examples 5 to 8, wherein the wireless channel is defined by an IEEE 802.11 standard.

Example 10 is the device of example 9, wherein the wireless channel includes one or more of a 20 MHz channel, a 40 MHz channel, a 80 MHz channel, a 160 MHz channel, and a 320 MHz channel.

Example 11 is the device of any one of examples 8 to 10, wherein the at least one channel of two or more eMLSR channels includes a primary channel.

Example 12 is the device of any one of examples 8 to 11, wherein the processing circuitry is configured to determine whether the at least one channel includes a primary channel, wherein the interference mitigation parameter is based on whether the at least one channel includes the primary channel.

Example 13 is the device of example 12, wherein if the at least one channel includes the primary channel, the interference mitigation parameter includes the processing circuitry configured to refuse to send an acknowledgement of receipt of a control message indicating a reception channel for receiving wireless communications on the wireless communication interface.

Example 14 is the device of either one of examples 12 or 13, wherein if the at least one channel includes the primary channel, the interference mitigation parameter includes the processing circuitry configured to limit a type of communications over the wireless communication interface.

Example 15 is the device of example 14, wherein the type of communications over the wireless communication interface is limited to a non-high-throughput (non-HT) low modulation-coding-scheme (low MSC) type of communications.

Example 16 is the device of any one of examples 12 to 15, wherein if the at least one channel includes the primary channel, the interference mitigation parameter includes the processing circuitry configured to adjust a gain setting for receiving wireless signals on the wireless communication interface during an initial packet acquisition. The processing circuitry is also configured to decode a received control frame using a duplicated portion of a non-primary channel, wherein the received control frame indicates a channel for scheduled wireless communication exchanges. The processing circuitry is also configured to adjust, only if the platform-based wireless interference characteristic includes interference on the channel for the scheduled wireless communication exchanges, the operational setting of the computing platform to a non-interference operational setting.

Example 17 is the device of example 16, wherein the non-interference operational setting includes a configuration of the computing platform that generates insignificant platform-based interference on the channel for the scheduled wireless communication exchanges.

Example 18 is the device of either one of examples 16 or 17, wherein the processing circuitry configured to decode the received control frame includes the processing circuitry configured to decode the received control frame after a start of packet detection and timing/frequency correction for the received control frame.

Example 19 is the device of any one of examples 8 to 18, wherein if the at least one channel includes a non-primary channel, the processing circuitry is configured to determine a channel for scheduled wireless communication exchanges. The processing circuitry is also configured to adjust, only if the platform-based wireless interference characteristic includes interference on the channel for the scheduled wireless communication exchanges, the operational setting of the computing platform to a non-interference operational setting.

Example 20 is the device of any one of examples 5 to 19, wherein the wireless channel includes a transmit channel and a receive channel that are independent.

Example 21 is the device of example 20, wherein an operation mode of the wireless communication interface includes a tri-band dual concurrency mode.

Example 22 is the device of any one of examples 20 to 21, wherein the computing platform is configured to generate a request that a blocked wireless region be restricted from use for wireless data transmissions over the wireless communication interface.

Example 23 is the device of example 22, wherein the blocked wireless region includes one or more resource units for the wireless data transmissions.

Example 24 is the device of any one of examples 20 to 23, wherein the processing circuitry is configured to set up the wireless communication interface based on requests of other stations associated with an access point that defines wireless communications over the wireless communication interface.

Example 25 is the device of any one of examples 1 to 24, wherein the platform-based wireless interference characteristic includes a noise spectrum, a noise bandwidth, and/or an average noise power due to the operational setting of the computing platform.

Example 26 is the device of any one of examples 1 to 25, wherein the interference mitigation parameter includes a usage restriction on a wireless channel of the wireless communication interface.

Example 27 is the device of example 26, wherein the usage restriction includes a blocked wireless channel that is restricted from use for wireless data transmissions over the wireless communication interface.

Example 28 is the device of any one of examples 1 to 27, wherein the wireless communication interface is defined by a wireless local area network protocol.

Example 29 is the device of example 28, wherein the wireless local area network protocol is defined by an IEEE 802.11 standard.

Example 30 is the device of any one of examples 1 to 29, wherein the processing circuitry configured to control the wireless communication interface of the computing platform based on the interference mitigation parameter includes the processing circuitry configured to provide the interference mitigation parameter to a wireless access point during a negotiation between the computing platform and the wireless access point, wherein the negotiation is over an allocated wireless channel resource for the wireless communication interface.

Example 31 is the device of any one of examples 1 to 30, wherein the processing circuitry configured to control the wireless communication interface of the computing platform based on the interference mitigation parameter includes the processing circuitry configured to reject, based on the interference mitigation parameter, a channel allocation received from a wireless access point.

Example 32 is the device of example 31, wherein the processing circuitry configured to reject the channel allocation includes sending a non-acknowledgement of a channel allocation message from the wireless access point or determining to withhold from sending an acknowledgement of the channel allocation message.

Example 33 is the device of any one of examples 1 to 32, wherein the processing circuitry configured to control the wireless communication interface of the computing platform based on the interference mitigation parameter includes the processing circuitry configured to switch wireless communications from a wireless access point to an other wireless access point that does not utilize a wireless channel impacted by the platform-based wireless interference characteristic.

Example 34 is the device of any one of examples 1 to 33, wherein the processing circuitry configured to control the wireless communication interface of the computing platform based on the interference mitigation parameter includes the processing circuitry configured to limit a type of communication over an allocated channel allocated to the computing platform.

Example 35 is the device of any one of examples 1 to 34, wherein the processing circuitry is configured to adjust the operational setting of the computing platform that is associated with the platform-based wireless interference characteristic to an adjusted operational setting, wherein the adjusted operational setting is configured to adjust the platform-based wireless interference characteristic to not interfere with the wireless communication interface.

Example 36 is the device of example 35, where in the operational setting includes a clock speed of a memory.

Example 37 is the device of either one of examples 35 or 36, wherein the operational setting includes a Dynamic Voltage Frequency Scaling (DVFS) point of a memory.

Example 38 is the device of any one of examples 1 to 37, wherein the processing circuitry configured to control the wireless communication interface of the computing platform based on the interference mitigation parameter includes the processing circuitry configured to send a user message to a user of the computing platform informing the user that a channel allocation of the wireless communication interface conflicts with the platform-based wireless interference characteristic.

Example 39 is the device of any one of examples 1 to 38, wherein the processing circuitry configured to control the wireless communication interface of the computing platform based on the interference mitigation parameter includes the processing circuitry configured to send a configuration message to the wireless access point indicating that one or more wireless channels are not to be used for the wireless communication interface.

Example 40 is the device of any one of examples 1 to 39, wherein the processing circuitry is further configured to adjust, based on the interference mitigation parameter, the operational setting that gave rise to the platform-based wireless interference characteristic, during a negotiated time within a wireless frame to be received over the wireless communication interface.

Example 41 is the device of example 40, wherein the negotiation time is based on a wireless communication protocol and/or a wireless system configuration of the wireless communication interface.

42 is the device of either one of examples 40 or 41, wherein the processing circuitry further configured to revert to a previous operational setting based on whether the platform-based wireless interference characteristic interferes with a scheduled wireless communication on the wireless communication interface.

Example 43 is the device of either one of examples 41 or 42, wherein the operational setting includes an operating point of a memory.

Example 44 is the device of example 43, wherein the operating point includes a speed of double-data rate memory.

Example 45 is the device of either one of examples 43 or 44, wherein the operating point includes a Dynamic Voltage Frequency Scaling (DVFS) point of the memory.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A device comprising processing circuitry coupled to storage, the processing circuitry configured to:
determine a platform-based wireless interference characteristic based on an operational setting of a computing platform;
determine an interference mitigation parameter based on the platform-based wireless interference characteristic; and
control a wireless communication interface of the computing platform based on the interference mitigation parameter.

2. The device of claim 1, wherein the operational setting comprises an operation of a component of the computing platform that induces the platform-based wireless interference characteristic within a frequency band of the wireless communication interface;
preferably wherein the component comprises a memory of the computing platform and the operation comprises a memory operation at a memory clock speed;
further preferably wherein the memory comprises a double data rate (DDR) memory or a low power double data rate memory (LPDDR).

3. The device of any one of claims 1 or 2, wherein the platform-based wireless interference characteristic comprises an interference signal on a wireless channel of the wireless communication interface.

4. The device of claim 3, wherein the wireless channel is defined by an IEEE 802.11 standard and comprises at least one channel of two or more Enhanced Multilink Single-Radio Operation (eMLSR) channels.

5. The device of claim 4, wherein the processing circuitry is configured to determine whether the at least one channel comprises a primary channel, wherein the interference mitigation parameter is based on whether the at least one channel comprises the primary channel.

6. The device of claim 5, wherein if the at least one channel comprises the primary channel, the interference mitigation parameter comprises the processing circuitry configured to refuse to send an acknowledgement of receipt of a control message indicating a reception channel for receiving wireless communications on the wireless communication interface; or
wherein if the at least one channel comprises the primary channel, the interference mitigation parameter comprises the processing circuitry configured to limit a type of communications over the wireless communication interface to a non-high-throughput (non-HT) low modulation-coding-scheme (low MSC) type of communications; or

7. The device of claim 5, wherein if the at least one channel comprises the primary channel, the interference mitigation parameter comprises the processing circuitry configured to:
adjust a gain setting for receiving wireless signals on the wireless communication interface during an initial packet acquisition;
decode a received control frame using a duplicated portion of a non-primary channel, wherein the received control frame indicates a channel for scheduled wireless communication exchanges; and
adjust, only if the platform-based wireless interference characteristic comprises interference on the channel for the scheduled wireless communication exchanges, the operational setting of the computing platform to a non-interference operational setting.

8. The device of claim 7, wherein the non-interference operational setting comprises a configuration of the computing platform that generates insignificant platform-based interference on the channel for the scheduled wireless communication exchanges; or wherein the processing circuitry configured to decode the received control frame comprises the processing circuitry configured to decode the received control frame after a start of packet detection and timing/frequency correction for the received control frame.

9. The device of any one of claims 4 to 8, wherein if the at least one channel comprises a non-primary channel, the processing circuitry is configured to:
determine a channel for scheduled wireless communication exchanges; and
adjust, only if the platform-based wireless interference characteristic comprises interference on the channel for the scheduled wireless communication exchanges, the operational setting of the computing platform to a non-interference operational setting.

10. The device of any one of claims 3 to 9, wherein an operation mode of the wireless communication interface comprises a tri-band dual concurrency mode, wherein the wireless channel comprises a transmit channel and a receive channel that are independent, wherein the computing platform is configured to generate a request that a blocked wireless region be restricted from use for wireless data transmissions over the wireless communication interface.

11. A computing system comprising:
a wireless interface configured to receive wireless communications; and
a device of any one of claims 1 to 10.

12. The computing system of claim 11, wherein the platform-based wireless interference characteristic comprises a noise spectrum, a noise bandwidth, and/or an average noise power due to the operational setting of the computing system.

13. The computing system of any one of claims 11 or 12, wherein the interference mitigation parameter comprises a usage restriction on a wireless channel of the wireless interface; preferably wherein the usage restriction comprises a blocked wireless channel that is restricted from use for wireless data transmissions over the wireless interface.

14. A non-transitory, computer-readable medium comprising instructions that, when executed, cause one or more processors to:
determine a platform-based wireless interference characteristic based on an operational setting of a computing platform;
determine an interference mitigation parameter based on the platform-based wireless interference characteristic; and
control a wireless communication interface of the computing platform based on the interference mitigation parameter.

15. The non-transitory, computer-readable medium of claim 14, wherein the instructions that cause the one or more processors to control the wireless communication interface of the computing platform based on the interference mitigation parameter comprises that the instructions cause the one or more processors to:
provide the interference mitigation parameter to a wireless access point during a negotiation between the computing platform and the wireless access point, wherein the negotiation is over an allocated wireless channel resource for the wireless communication interface;
reject, based on the interference mitigation parameter, a channel allocation received from a wireless access point;
switch wireless communications from the wireless access point to an other wireless access point that does not utilize a wireless channel impacted by the platform-based wireless interference characteristic; and/or
limit a type of communication over an allocated channel allocated to the computing platform.
